# FASCICULE DE BREVET EUROPEEN

(11) **EP 3 209 532 B1**
(45) Date de publication et mention de la délivrance du brevet: **12.05.2021**
(21) Numéro de dépôt: 15788157.4
(22) Date de dépôt: 08.10.2015
(51) Int. Cl.: B60W 50/10, B60W 30/18, B60W 30/12

(54) **DISPOSITIF DE CONTRÔLE DE DÉSACTIVATION D'UN SYSTÈME DE SURVEILLANCE DE TRAJECTOIRE D'UN VÉHICULE, PRENANT EN COMPTE LA DIRECTION D'OBSERVATION DES YEUX DU CONDUCTEUR**
VORRICHTUNG ZUR STEUERUNG DER DEAKTIVIERUNG EINES SYSTEMS ZUR ÜBERWACHUNG DES WEGES EINES FAHRZEUGS JE NACH BLICKRICHTUNG EINES FAHRERS
DEVICE FOR CONTROLLING THE DEACTIVATION OF A SYSTEM FOR MONITORING THE PATH OF A VEHICLE, ACCORDING TO THE DIRECTION IN WHICH THE EYES OF A DRIVER ARE LOOKING

(30) Priorité: 20.10.2014 FR 1460050
(43) Date de publication de la demande: 30.08.2017
(73) Titulaire: PSA Automobiles SA, 78300 Poissy (FR)
(72) Inventeur: SEREZAT, Laurent, 91410 Corbreuse (FR)
(86) Numéro de dépôt international: PCT/FR2015/052710
(87) Numéro de publication internationale: WO 2016/062936

(56) Documents cités:
- EP-A1- 0 640 903
- EP-A1- 1 726 513
- WO-A1-2011/075392
- US-A1- 2011 106 376

## Description

L'invention concerne les véhicules, éventuellement de type automobile, et plus précisément les systèmes embarqués qui sont chargés de surveiller les trajectoires des véhicules.

Certains véhicules, généralement de type automobile, comprennent un système de surveillance de trajectoire (ou LKA (« Lane Keeping Assist »)) chargé de corriger leurs écarts de trajectoire pour les positionner correctement sur une voie de circulation. Cette correction se fait en fonction d'images qui sont représentatives d'une partie de la voie de circulation située devant le véhicule. Plus précisément, lorsque l'analyse des images indique que le véhicule se rapproche d'une, ou commence à franchir une, ligne délimitant partiellement la voie de circulation sur laquelle il roule, le système précité agit sur la direction assistée électrique afin qu'il roule de nouveau sensiblement au centre de cette voie de circulation.

Cette correction de trajectoire s'avère particulièrement utile lorsque le conducteur fait preuve d'inattention ou fait l'objet d'une perte de vigilance. Mais elle peut rendre difficile, voire impossible, une manœuvre de dépassement lorsque l'écart de trajectoire détecté résulte d'une action volontaire du conducteur sur le volant pour dépasser le véhicule qui le précède sans activation des moyens d'indication de changement de direction du véhicule.

On connait notamment du document EP1726513A1, un dispositif conforme au préambule de la revendication 1.

Cependant, ce dispositif ne permet pas en cas de déclenchement de la désactivation temporaire de la surveillance, d'activer automatiquement (à la place du conducteur) les moyens d'indication de changement de direction.

L'invention a donc notamment pour but d'améliorer la situation.

Elle propose notamment à cet effet un dispositif de contrôle conforme à la partie caractérisante de la revendication 1.

Le dispositif de contrôle selon l'invention peut comporter d'autres caractéristiques qui peuvent être prises séparément ou en combinaison, et notamment :
- ses moyens de contrôle peuvent être agencés pour déclencher une désactivation temporaire de la surveillance réalisée par le système de surveillance de trajectoire en cas de détection d'un déplacement d'au moins une main du conducteur par rapport à un volant du véhicule ;
- ses moyens d'analyse peuvent être agencés pour analyser des données d'images qui sont acquises par des moyens d'acquisition installés dans un habitacle du véhicule et qui sont représentatives au moins des yeux du conducteur, afin de détecter les déplacements de ces yeux, et pour déduire de ces déplacements détectés des directions d'observation ;

L'invention propose également un système de surveillance de trajectoire, d'une part, propre à corriger des écarts de trajectoire d'un véhicule afin de le positionner correctement sur une voie de circulation en fonction d'images représentatives d'une partie de cette dernière située devant ce véhicule, et, d'autre part, comprenant un dispositif de contrôle du type de celui présenté ci-avant.

L'invention propose également un premier véhicule, éventuellement de type automobile, et comprenant un système de surveillance de trajectoire du type de celui présenté ci-avant.

L'invention propose également un second véhicule, éventuellement de
type automobile, et comprenant, d'une part, un système de surveillance de trajectoire propre à corriger des écarts de trajectoire afin de le positionner correctement sur une voie de circulation en fonction d'images représentatives d'une partie de cette dernière située devant lui, et, d'autre part, un dispositif de contrôle du type de celui présenté ci-avant.

L'invention propose également un procédé dédié au contrôle de la désactivation d'un système de surveillance de trajectoire propre à corriger des écarts de trajectoire d'un véhicule pour le positionner correctement sur une voie de circulation en fonction d'images représentatives d'une partie de cette dernière située devant ce véhicule.

Ce procédé se caractérise par le fait qu'il est conforme à la partie caractérisante de la revendication 5.

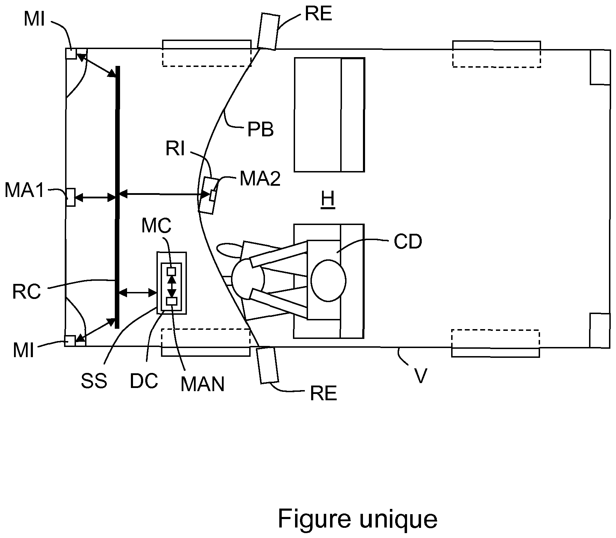

D'autres caractéristiques et avantages de l'invention apparaîtront à l'examen de la description détaillée ci-après, et du dessin annexé, sur lequel l'unique figure illustre schématiquement et fonctionnellement un véhicule automobile équipé d'un système de surveillance de trajectoire et d'un exemple de réalisation d'un dispositif de contrôle selon l'invention.

L'invention a notamment pour but de proposer un dispositif de contrôle DC, et un procédé de contrôle associé, destinés à contrôler la désactivation d'un système de surveillance de trajectoire SS embarqué dans un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule pouvant être conduit par un conducteur et circuler sur des voies de circulation (notamment). Par conséquent, elle concerne au moins les véhicules terrestres (et notamment les camions, les bus et les véhicules autonomes).

On a schématiquement représenté sur l'unique figure un exemple non limitatif de véhicule V conduit par un conducteur CD installé dans un habitacle H, et équipé d'au moins un rétroviseur RI ou RE, de moyens d'indication de changement de direction MI, d'une direction assistée électrique, d'un système de surveillance de trajectoire SS et d'un dispositif de contrôle DC selon l'invention.

On notera que dans l'exemple de réalisation illustré non limitativement sur l'unique figure, le véhicule V comprend un rétroviseur intérieur RI installé dans la partie avant de l'habitacle H et deux rétroviseurs extérieurs RE. Par ailleurs, les moyens d'indication de changement de direction MI comprennent notamment des feux clignotants activables et désactivables par des moyens de contrôle d'éclairage (non représentés), par exemple par action du conducteur CD sur une manette (ou un commodo).

On notera que les rétroviseurs peuvent être éventuellement des caméras couplées à une interface homme/machine associée (comme par exemple un écran déporté dans la planche de bord ou dans une garniture de porte).

Par exemple, et comme illustré non limitativement, le véhicule V peut également comprendre un réseau de communication RC, éventuellement de type multiplexé, et permettant l'échange de données et de commandes entre ses équipements électroniques (et notamment ses calculateurs et certains au moins de ses capteurs).

Le système de surveillance de trajectoire SS (ou LKA (« Lane Keeping Assist »)) est agencé, lorsqu'il est activé, de manière à analyser des images qui sont représentatives d'une partie de la voie de circulation qui est située devant son véhicule V, afin de détecter quand ce dernier (V) se rapproche d'une, ou commence à franchir une, ligne délimitant cette voie de circulation, et d'agir sur la direction assistée électrique du véhicule V afin qu'il roule de nouveau sensiblement au centre de cette voie de circulation lorsqu'une telle détection survient alors que les moyens d'indication de changement de direction MI n'ont pas été activés.

Les images qui sont analysées par le système (de surveillance de trajectoire) SS sont acquises par des premiers moyens d'acquisition MA1, installés dans une partie avant du véhicule V. Ces premiers moyens d'acquisition MA1 peuvent, par exemple, comprendre au moins une caméra numérique. On notera que ces premiers moyens d'acquisition MA1 font éventuellement partie du système SS. Mais cela n'est pas obligatoire. En effet, ils pourraient faire partie d'un autre système embarqué dans le véhicule V, comme par exemple un système d'aide au stationnement ou d'aide aux manœuvres. Dans ce cas, le système SS peut, par exemple, récupérer les images acquises par les premiers moyens d'acquisition MA1 (et éventuellement prétraitées) via le réseau de communication RC.

Comme illustré sur l'unique figure, un dispositif (de contrôle) DC, selon l'invention, comprend au moins des moyens d'analyse MAN et des moyens de contrôle MC.

On notera que dans l'exemple de réalisation non limitatif illustré sur l'unique figure, le dispositif DC fait partie du système SS, lequel fait éventuellement partie d'un calculateur ou bien constitue un calculateur dédié. Mais cela n'est pas obligatoire. En effet, le dispositif DC pourrait être un équipement électronique connecté au réseau de communication RC ou bien faire partie d'un calculateur, comme par exemple l'ordinateur de bord du véhicule V. Par conséquent, le dispositif DC peut être réalisé sous la forme de modules logiciels (ou informatiques ou encore « software »), ou bien d'une combinaison de circuits électroniques (ou « hardware ») et de modules logiciels.

Les moyens d'analyse MAN sont agencés pour analyser des données qui sont représentatives de déplacements des yeux du conducteur CD afin de détecter une observation en direction d'au moins un rétroviseur RI, RE.

On comprendra que lorsque l'on connaît la position générale dans laquelle se trouvent les yeux du conducteur CD lorsqu'il regarde la partie de la voie de circulation située droit devant lui (position de conduite la plus fréquente), il existe une très forte probabilité pour que ce conducteur CD observe le rétroviseur intérieur RI lorsque ses yeux se déplacent vers la droite (dans le cas d'une conduite à gauche) ou le rétroviseur extérieur RE lorsque ses yeux se déplacent vers la gauche. Par conséquent la détection d'un déplacement des yeux vers la droite sera considérée par les moyens d'analyse MAN comme une observation dans le rétroviseur intérieur RI, alors que la détection d'un déplacement des yeux vers la gauche sera considérée par les moyens d'analyse MAN comme une observation dans le rétroviseur extérieur RE.

On notera que selon la configuration des moyens d'analyse MAN et/ou selon le type du véhicule V, les moyens d'analyse MAN seront capables de détecter seulement une observation en direction du rétroviseur intérieur RI, ou seulement une observation en direction du rétroviseur extérieur RE, ou encore une observation en direction du rétroviseur intérieur RI et une observation en direction du rétroviseur extérieur RE.

On notera également que dans la dernière alternative, on peut envisager que l'ordre dans lequel les rétroviseurs intérieur RI et extérieur RE sont observés peut être éventuellement important. En effet, on pourrait envisager qu'il faille d'abord une observation en direction du rétroviseur intérieur RI puis une observation en direction du rétroviseur extérieur RE, pour que l'on considère que le conducteur veut effectuer une manœuvre de dépassement. En variante, on pourrait envisager qu'il faille d'abord une observation en direction du rétroviseur extérieur RE puis une observation en direction du rétroviseur intérieur RI, pour que l'on considère que le conducteur veut effectuer une manœuvre de dépassement. Dans une autre variante, l'ordre de détection n'a pas d'importance, l'essentiel étant que les deux observations soient détectées.

Les données qui sont représentatives de déplacements des yeux résultent d'une analyse de données d'images acquises par des seconds moyens d'acquisition MA2 installés dans l'habitacle H et représentatives au moins des yeux du conducteur CD. Par exemple, ces seconds moyens d'acquisition MA2 peuvent être installés au moins partiellement dans le rétroviseur intérieur RI, comme illustré non limitativement sur l'unique figure. Ils peuvent comprendre une caméra numérique orientée vers le conducteur CD, en particulier vers sa tête. On notera que ces seconds moyens d'acquisition MA2 peuvent soit faire partie du dispositif DC, soit faire partie d'un autre système embarqué dans le véhicule V, comme par exemple un système de détection d'hypovigilance. Dans ce dernier cas, le système SS peut, par exemple, récupérer les images acquises par les seconds moyens d'acquisition MA2 (et éventuellement prétraitées) via le réseau de communication RC.

On notera que les moyens d'analyse MAN peuvent être éventuellement agencés pour analyser les données d'images acquises par les seconds moyens d'acquisition MA2 afin de détecter les déplacements des yeux, et pour déduire de ces déplacements détectés des directions d'observation. Mais dans une variante de réalisation, lorsque les seconds moyens d'acquisition MA2 font partie d'un autre système embarqué, les détections des déplacements des yeux pourraient être réalisées par les moyens de traitement de ce système embarqué. Dans ce cas, les moyens d'analyse MAN ne font qu'analyser les données représentatives des déplacements des yeux pour déduire de ces déplacements des directions d'observation.

Les moyens de contrôle MC sont agencés, en l'absence d'activation des moyens d'indication de changement de direction MI au début d'une correction d'écart de trajectoire par le système SS, pour déclencher une désactivation temporaire de la surveillance réalisée par le système SS en cas de détection d'une observation en direction d'au moins un rétroviseur RI, RE, de manière à permettre la réalisation d'une éventuelle manœuvre de dépassement.

L'observation par le conducteur dans la direction d'au moins un rétroviseur RI, RE au début d'une correction d'écart de trajectoire est donc ici considérée comme une surveillance de l'environnement arrière et/ou latéral du véhicule V dans le cadre d'une manœuvre de dépassement. Par conséquent, lorsqu'au moins une telle observation est détectée il ne faut pas que le conducteur CD soit gêné par l'action du système SS, et donc les moyens de contrôle MC déclenchent une désactivation temporaire de la surveillance réalisée par ce système SS.

La durée de cette désactivation peut être soit configurée à l'avance et donc prédéfinie, soit fonction de la vitesse en cours du véhicule V, soit encore dépendante de la détection d'une fin de manœuvre de dépassement (par exemple par le système SS).

Dès que cette durée est écoulée, les moyens de contrôle MC déclenchent une réactivation de la surveillance réalisée par le système SS.

Le dispositif DC est averti par le système SS dès qu'il décide de procéder à une correction de la trajectoire du véhicule V.

Dans un mode de réalisation optionnel, les moyens de contrôle MC peuvent être agencés pour déclencher une désactivation temporaire de la surveillance réalisée par le système SS lorsqu'en outre un déplacement d'au moins une main du conducteur CD par rapport au volant du véhicule V est détecté. Un déplacement de main(s) est en effet un indicateur supplémentaire de la volonté du conducteur CD d'effectuer une manœuvre de dépassement.

Cette détection de déplacement de main(s) peut être réalisée soit par les moyens d'analyse MAN lorsqu'ils sont chargés d'analyser les images acquises par les seconds moyens d'acquisition MA2 et que ces images contiennent également les mains du conducteur CD dans la zone du volant, soit par les moyens de traitement du système embarqué comprenant ces seconds moyens d'acquisition MA2, soit encore par un système de détection de positionnement des mains (équipant le volant et comprenant par exemple au moins un capteur capacitif), de préférence combiné à un capteur d'effort chargé de détecter l'effort exercé sur la direction assistée par le conducteur CD (lequel montre sa volonté de tourner le volant).

Les moyens de contrôle MC sont avantageusement agencés pour déclencher une activation des moyens d'indication de changement de direction MI en cas de déclenchement de la désactivation temporaire de la surveillance réalisée par le système SS. Cette fonction est destinée à avertir le conducteur d'un véhicule qui suit le véhicule V ou qui circule selon un sens opposé à celui du véhicule V, que ce dernier (V) s'apprête à changer de direction pour effectuer une manœuvre de dépassement alors même que le conducteur CD n'a pas activé les moyens d'indication de changement de direction MI.

Pour ce faire, les moyens de contrôle MC peuvent, par exemple, adresser une requête d'activation des moyens d'indication de changement de direction MI aux moyens de contrôle d'éclairage, via le réseau de communication RC. Dans ce cas, on peut envisager que les moyens de contrôle MC déclenchent la génération d'un message destiné à informer le conducteur CD de l'activation des moyens d'indication de changement de direction MI à sa place. En variante, les moyens de contrôle MC peuvent demander au conducteur CD de valider la proposition d'activation des moyens d'indication de changement de direction MI via une interface homme/machine appropriée (ou d'activer lui-même les moyens d'indication de changement de direction MI).

Les moyens de contrôle MC sont avantageusement agencés pour déclencher la désactivation temporaire de la surveillance réalisée par le système SS si un obstacle (objet, voiture, personne ou animal) a été détecté devant le véhicule V. On comprendra en effet que s'il n'y a pas d'obstacle devant le véhicule V, le conducteur CD n'a pas de raison d'effectuer une manœuvre de dépassement et donc il ne faut pas désactiver temporairement la surveillance réalisée par le système SS car l'on est très probablement dans le cas d'une inattention ou d'une perte de vigilance du conducteur CD.

Cette détection de présence d'un obstacle est réalisée par le système SS, par exemple par analyse des images acquises par les premiers moyens d'acquisition MA1. Les moyens de contrôle MC sont donc informés d'une telle détection par le système SS. En variante, la détection d'un obstacle devant le véhicule V peut être effectuée par d'éventuels moyens de détection de type radar équipant le véhicule V dans sa partie avant. Dans cette variante, les moyens de contrôle MC sont informés de la détection d'un obstacle par les moyens de détection.

Il est important de noter que l'invention peut être également considérée sous l'angle d'un procédé de contrôle, pouvant être notamment mis en œuvre au moyen d'un dispositif de contrôle DC du type de celui présenté ci-avant. Les fonctionnalités offertes par la mise en œuvre du procédé selon l'invention étant identiques à celles offertes par le dispositif de contrôle DC présenté ci-avant, seule la combinaison de fonctionnalités principales offerte par le procédé est présentée ci-après.

Ce procédé de contrôle comprend :
- une étape dans laquelle on (les moyens d'analyse MAN du dispositif DC) analyse(nt) des données qui sont représentatives de déplacements des yeux du conducteur CD pour détecter une observation en direction d'au moins un rétroviseur RI, RE, et
- une étape dans laquelle on (les moyens de contrôle MC du dispositif DC) désactive(nt) temporairement la surveillance réalisée par le système de surveillance de trajectoire SS en cas de détection de cette observation en l'absence d'activation des moyens d'indication de changement de direction MI, afin de permettre la réalisation d'une éventuelle manœuvre de dépassement.

Grâce à l'invention, il est désormais possible de désactiver temporairement la surveillance réalisée par un système de surveillance de trajectoire lorsque l'on détecte que le conducteur veut effectuer une manœuvre de dépassement sans avoir activé les moyens d'indication de changement de direction, ce qui est de nature à améliorer la sécurité.

## Revendications

1. Dispositif de contrôle (DC) pour un véhicule (V) comprenant un système de surveillance de trajectoire (SS) propre à corriger des écarts de trajectoire pour le positionner correctement sur une voie de circulation en fonction d'images représentatives d'une partie de cette dernière située devant ledit véhicule (V), comprenant i) des moyens d'analyse (MAN) agencés pour analyser des données représentatives de déplacements des yeux d'un conducteur dudit véhicule (V) pour détecter une observation en direction d'au moins un rétroviseur (RI, RE), ii) des moyens de contrôle (MC) agencés, pour déclencher une désactivation temporaire de la surveillance réalisée par ledit système (SS) en cas de détection de ladite observation, de manière à permettre la réalisation d'une éventuelle manœuvre de dépassement ; le dispositif étant **caractérisé en ce que** lesdits moyens de contrôle sont adaptés pour déclencher la désactivation temporaire de la surveillance en cas de détection de ladite observation en l'absence d'activation par le conducteur (CD) de moyens d'indication de changement de direction (MI) dudit véhicule (V) au début d'une correction d'écart de trajectoire et pour activer alors lesdits moyens d'indication de changement de direction qui jusque-là étaient inactivés et **en ce que** lesdits moyens de contrôle (MC) sont également agencés pour déclencher ladite désactivation temporaire de la surveillance réalisée par ledit système (SS) en cas de détection d'un obstacle devant ledit véhicule (V).

2. Dispositif selon la revendication 1, **caractérisé en ce que** lesdits moyens de contrôle (MC) sont agencés de plus pour déclencher la désactivation temporaire de la surveillance réalisée par ledit système (SS) en cas de détection d'un déplacement d'au moins une main dudit conducteur par rapport à un volant dudit véhicule (V).

3. Dispositif selon l'une des revendications 1 ou 2, **caractérisé en ce que** lesdits moyens d'analyse (MAN) sont agencés pour analyser des données d'images acquises par des moyens d'acquisition (MA2) installés dans un habitacle (H) dudit véhicule (V) et représentatives au moins desdits yeux du conducteur, afin de détecter les déplacements desdits yeux, et pour déduire de ces déplacements détectés des directions d'observation.

4. Véhicule (V) comprenant un système de surveillance de trajectoire (SS) propre à corriger des écarts de trajectoire afin de le positionner correctement sur une voie de circulation en fonction d'images représentatives d'une partie de cette dernière située devant lui (V), **caractérisé en ce qu'**il comprend en outre un dispositif de contrôle (DC) selon l'une des revendications 1 à 3.

5. Procédé de contrôle de désactivation d'un système de surveillance de trajectoire (SS) propre à corriger des écarts de trajectoire d'un véhicule (V) pour le positionner correctement sur une voie de circulation en fonction d'images représentatives d'une partie de cette dernière située devant ledit véhicule (V), le procédé étant mis en œuvre par un dispositif électronique de contrôle, et comprenant une étape dans laquelle on analyse des données représentatives de déplacements des yeux d'un conducteur dudit véhicule (V) pour détecter une observation en direction d'au moins un rétroviseur (RI, RE), et une étape dans laquelle on désactive temporairement la surveillance réalisée par ledit système (SS) en cas de détection de ladite observation de manière à permettre la réalisation d'une éventuelle manœuvre de dépassement le procédé étant **caractérisé en ce que** on déclenche la désactivation temporaire de la surveillance de trajectoire en cas de détection de ladite observation en l'absence d'activation par le conducteur (CD) de moyens d'indication de changement de direction (MI) dudit véhicule (V) au début d'une correction d'écart de trajectoire et **en ce que** on active alors lesdits moyens d'indication de changement de direction qui jusque-là étaient inactivés et **en ce qu'**on déclenche également ladite désactivation temporaire de la surveillance réalisée par ledit système (SS) en cas de détection d'un obstacle devant ledit véhicule (V).

## Patentansprüche

1. Steuervorrichtung (DC) für ein Fahrzeug (V) mit einem Bahnüberwachungssystem (SS), das in der Lage ist, Bahnabweichungen zu korrigieren, um es in Abhängigkeit von Bildern, die für einen vor dem Fahrzeug (V) befindlichen Teil desselben repräsentativ sind, korrekt in einer Fahrspur zu positionieren, mit i) Analysemitteln (MAN), die so beschaffen sind, dass sie Daten analysieren, die für Verschiebungen der Augen eines Fahrers des Fahrzeugs (V) repräsentativ sind, um eine Beobachtung in Richtung mindestens eines Rückspiegels (RI, RE), **dadurch gekennzeichnet, dass** es außerdem ii) Steuermittel (MC) umfasst, die so beschaffen sind, dass sie bei fehlender Aktivierung von Mitteln zur Anzeige einer Richtungsänderung (MI) des Fahrzeugs (V) durch den Fahrer (CD) zu Beginn einer Korrektur der Abweichung von der Fahrbahn eine vorübergehende Deaktivierung der von dem System (SS) durchgeführten Überwachung im Falle der Erfassung der Beobachtung auslösen, um die Durchführung eines eventuellen Überholmanövers zu ermöglichen; ; die Vorrichtung **dadurch gekennzeichnet ist, dass** die Steuermittel geeignet sind, die vorübergehende Deaktivierung der Überwachung im Falle der Erfassung der Beobachtung bei fehlender Aktivierung von Richtungsänderungsanzeigemitteln (MI) der (v) durch den Fahrer (CD) zu Beginn einer Korrektur der Abweichung von der Bahn auszulösen und dann die Richtungsänderungsanzeigemittel zu aktivieren, die bis dahin inaktiviert waren, und dass die Steuermittel geeignet sind, die vorübergehende Deaktivierung der Überwachung im Falle der Erfassung der Beobachtung bei fehlender Aktivierung von Richtungsänderungsanzeigemitteln (MI) der (v) durch den Fahrer (CD) auszulösen. (V) zu Beginn einer Kursabweichungskorrektur zu überwachen und dann die Richtungsänderungsanzeigemittel zu aktivieren, die bis dahin inaktiviert waren, und dass die Steuermittel (MC) auch so angeordnet sind, dass sie die vorübergehende Deaktivierung der von dem System (SS) durchgeführten Überwachung im Falle der Erfassung eines Hindernisses vor dem Fahrzeug (V) auslösen.

2. Vorrichtung nach Anspruch 1, **dadurch gekennzeichnet, dass** die Steuermittel (MC) ferner so angeordnet sind, dass sie die vorübergehende Deaktivierung der von dem System (SS) durchgeführten Überwachung auslösen, wenn eine Verlagerung von mindestens einer Hand des Fahrers in Bezug auf ein Lenkrad des Fahrzeugs (V) erfasst wird.

3. Vorrichtung nach einem der Ansprüche 1 oder 2, **dadurch gekennzeichnet, dass** die Analysemittel (MAN) eingerichtet sind, um Bilddaten zu analysieren, die von Erfassungsmitteln (MA2) erfasst wurden, die in einem Fahrgastraum (H) des Fahrzeugs (V) installiert sind und zumindest die Augen des Fahrers darstellen, um die Verschiebungen der Augen zu erfassen und aus diesen erfassten Verschiebungen Beobachtungsrichtungen abzuleiten.

4. Fahrzeug (V) mit einem Bahnüberwachungssystem (SS), das in der Lage ist, Bahnabweichungen zu korrigieren, um es in Abhängigkeit von Bildern, die für einen vor ihm (V) befindlichen Teil desselben repräsentativ sind, korrekt auf einer Verkehrsspur zu positionieren, **dadurch gekennzeichnet, dass** es außerdem eine Steuervorrichtung (DC) nach einem der Ansprüche 1 bis 3 umfasst.

5. Verfahren zur Steuerung der Deaktivierung eines Bahnüberwachungssystems (SS), das geeignet ist, Abweichungen der Bahn eines Fahrzeugs (V) zu korrigieren, um es in Abhängigkeit von Bildern, die für einen vor dem Fahrzeug (V) befindlichen Teil desselben repräsentativ sind, korrekt in einer Fahrspur zu positionieren, wobei das Verfahren durch eine elektronische Steuervorrichtung ausgeführt wird und einen Schritt umfasst, in dem Daten analysiert werden, die für Verschiebungen der Augen eines Fahrers des Fahrzeugs (V) repräsentativ sind, um eine Beobachtung in Richtung mindestens eines Rückspiegels (RI, RE) zu erfassen und einen Schritt, bei dem die von dem System (SS) durchgeführte Überwachung im Falle der Erfassung der Beobachtung vorübergehend deaktiviert wird, um die Durchführung eines möglichen Überholmanövers zu ermöglichen, wobei das Verfahren **dadurch gekennzeichnet ist, dass** die vorübergehende Deaktivierung der Bahnüberwachung im Falle der Erfassung der Beobachtung in Abwesenheit einer Aktivierung von Mitteln (M) zur Anzeige einer Richtungsänderung des Fahrzeugs (V) durch den Fahrer (CD) zu Beginn einer Korrektur einer Abweichung von der Bahn ausgelöst wird, und dass die Mittel zur Anzeige einer Richtungsänderung, die bis dahin inaktiv waren, dann aktiviert werden, und dass die vorübergehende Deaktivierung im Falle der Erfassung der Beobachtung ausgelöst wird. dass die besagte vorübergehende Deaktivierung der von dem besagten System (SS) durchgeführten Überwachung auch im Falle der Erfassung eines Hindernisses vor dem besagten Fahrzeug (V) ausgelöst wird.

## Claims

1. Control device (DC) for a vehicle (V) comprising a trajectory monitoring system (SS) capable of correcting trajectory deviations in order to position it correctly in a traffic lane as a function of images representative of a part of the latter situated in front of the said vehicle (V), comprising i) analysis means (MAN) arranged to analyse data representative of movements of the eyes of a driver of the said vehicle (V) in order to detect an observation in the direction of at least one rear-view mirror (RI, RE), **characterized in that** it further comprises ii) control means (MC) arranged, in the absence of activation by the driver (CD) of direction change indication means (MI) of said vehicle (V) at the beginning of a correction of deviation from the trajectory, to trigger a temporary deactivation of the monitoring carried out by said system (SS) in the event of detection of said observation, so as to allow the carrying out of an eventual overtaking maneuver;; (V) at the beginning of a course deviation correction and to then activate said direction change indicating means which until then had been inactivated and **in that** said control means (MC) are also arranged to trigger said temporary deactivation of the monitoring performed by said system (SS) in case of detection of an obstacle in front of said vehicle (V).

2. Device according to claim 1, **characterized in that** said control means (MC) are further arranged to trigger the said temporary deactivation of the monitoring performed by said system (SS) in case of detection of a displacement of at least one hand of said driver with respect to a steering wheel of said vehicle (V).

3. Device according to one of claims 1 or 2, **characterized in that** said analysis means (MAN) are arranged to analyze image data acquired by acquisition means (MA2) installed in a passenger compartment (H) of said vehicle (V) and representative of at least said eyes of the driver, in order to detect the displacements of said eyes, and to deduce from these detected displacements observation directions.

4. Vehicle (V) comprising a trajectory monitoring system (SS) capable of correcting trajectory deviations in order to position it correctly in a traffic lane as a function of images representative of a part of the latter situated in front of it (V), **characterized in that** it further comprises a control device (DC) according to one of claims 1 to 3.

5. Method for controlling the deactivation of a trajectory monitoring system (SS) suitable for correcting deviations in the trajectory of a vehicle (V) in order to position it correctly in a traffic lane as a function of images representative of a part of the latter situated in front of the said vehicle (V), the method being implemented by an electronic control device, and comprising a step in which data representative of displacements of the eyes of a driver of the said vehicle (V) are analysed in order to detect an observation in the direction of at least one rear-view mirror (RI, RE) and a step in which the monitoring carried out by said system (SS) is temporarily deactivated in the event of detection of said observation so as to allow a possible overtaking manoeuvre to be carried out, the method being **characterized in that** the temporary deactivation of the trajectory monitoring is triggered in the event of detection of said observation in the absence of activation by the driver (CD) of direction change indication means (M) of said vehicle (V) at the start of a correction of a deviation from the trajectory, and **in that** the said direction change indication means, which had been inactivated up to then, are then activated, and **in that** the temporary deactivation is triggered in the event of detection of said observation in **in that** the said temporary deactivation of the monitoring carried out by the said system (SS) is also triggered in the event of detection of an obstacle in front of the said vehicle (V).
